# EUROPÄISCHE PATENTSCHRIFT

(11) **EP 0 769 684 B1**
(45) Veröffentlichungstag und Bekanntmachung des Hinweises auf die Patenterteilung: **02.01.2003**
(21) Anmeldenummer: 96116316.9
(22) Anmeldetag: 11.10.1996
(51) Int. Cl.: G01F 23/296, B06B 1/06

(54) **Anordnung zur Überwachung eines vorbestimmten Füllstands einer Flüsssigkeit in einem Behälter**
System for monitoring a predetermined level of a fluid in a container
Système de surveillance d'un niveau prédéterminé d'un fluide dans un récipient

(30) Priorität: 17.10.1995 DE 19538696
(43) Veröffentlichungstag der Anmeldung: 23.04.1997
(73) Patentinhaber: Endress + Hauser GmbH + Co.KG., 79689 Maulburg (DE)
(72) Erfinder: Getman, Igor, Prof. Dr., 79540 Lörrach (DE); Lopatin, Sergej, Dr., 79539 Lörrach (DE); Müller, Roland, 79585 Steinen (DE)
(74) Vertreter: Andres, Angelika

(56) Entgegenhaltungen:
- DE-A- 2 833 997
- DE-A- 3 721 209
- DE-C- 4 230 773

## Beschreibung

Die Erfindung betrifft eine Anordnung zur Überwachung eines vorbestimmten Füllstands einer Flüssigkeit in einem Behälter mit einem Ultraschallwandler, der an einer auf der Höhe des zu überwachenden Füllstands liegenden Meßstelle an der Außenseite der Behälterwand montiert ist und ein piezoelektrisches Element enthält, das bei Erregung durch einen Wechselspannungsimpuls mit einer vorgegebenen Sendefrequenz einen Ultraschall-Sendeimpuls erzeugt, der über eine Membran auf die Behälterwand übertragen wird, und das Ultraschallschwingungen, die von der Behälterwand auf den Ultraschallwandler übertragen werden, in elektrische Empfangssignale umwandelt.

Für das einwandfreie Funktionieren einer Anordnung dieser Art und die Erzielung eines guten Wirkungsgrads ist es wesentlich, daß eine gute akustische Kopplung einerseits zwischen dem piezoelektrischen Element und der Membran und andererseits zwischen der Membran und der Behälterwand besteht. Insbesondere dürfen zwischen diesen Teilen keine Luftschichten vorhanden sein, da diese zu hohen Sprüngen der akustischen Impedanz auf dem Weg vom piezoelektrischen Element zur Behälterwand und zurück führen würden. Eine solche gute akustische Kopplung ist insbesondere zwischen der Membran und der Behälterwand schwierig zu erzielen, da die Behälterwand oft rauh und mit nicht vorhersehbaren Unebenheiten behaftet ist.

Der Erfindung liegt die Aufgabe zugrunde, eine Anordnung der eingangs angegebenen Art so auszubilden, daß eine gute akustische Kopplung zwischen dem piezoelektrischen Wandler und der Behälterwand über die Membran besteht.

Nach der Erfindung wird diese Aufgabe dadurch gelöst, daß die Membran auf der der Behälterwand zugewandten Seite Vorsprünge aufweist, die an der Behälterwand anliegen, und daß der Zwischenraum zwischen der Membran und der Behälterwand mit einer Kopplungsschicht ausgefüllt ist, deren Dicke durch die Höhe der Vorsprünge bestimmt ist.

Durch die Kopplungsschicht definierter Dicke, die durch die erfindungsgemäße Ausbildung der Membran erzielt wird, wird die Bildung einer Luftschicht zwischen der Membran und der Behälterwand verhindert und ein Impedanzsprung vermieden, so daß eine gute akustische Kopplung zwischen der Membran und der Behälterwand besteht.

Vorteilhafte Ausgestaltungen und Weiterbildungen der Erfindung sind in den Unteransprüchen gekennzeichnet.

Weitere Merkmale und Vorteile der Erfindung ergeben sich aus der folgenden Beschreibung eines Ausführungsbeispiels anhand der Zeichnungen. In den Zeichnungen zeigen:
- Fig. 1: eine schematische Darstellung zur Erläuterung der Überwachung von vorbestimmten Füllständen einer Flüssigkeit in einem Behälter,
- Fig. 2: eine perspektivische Ansicht einer Ausführungsform des bei der Erfindung angewendeten Ultraschallsensors,
- Fig. 3: einen Längsschnitt durch den Ultraschallsensor von Fig. 2 bei Anbringung an einer ebenen Behälterwand,
- Fig. 4: einen Querschnitt durch den Ultraschallsensor von Fig. 2 bei Anbringung an einer zylindrischen Behälterwand,
- Fig. 5: eine Schnittansicht des im Ultraschallsensor von Fig. 2 bis 4 verwendeten Ultraschallwandlers,
- Fig. 6: eine Draufsicht auf eine im Ultraschallwandler von Fig. 5 verwendete Montagehülse,
- Fig. 7: eine Schnittansicht der Montagehülse von Fig. 6,
- Fig. 8: eine perspektivische Ansicht der Montagehülse von Fig. 6 und 7,
- Fig. 9: eine Schnittansicht des leeren Wandlergehäuses des Ultraschallwandlers von Fig. 5 und
- Fig. 10: eine Ansicht der Außenseite der durch den Boden des Wandlergehäuses von Fig. 9 gebildeten Membran.

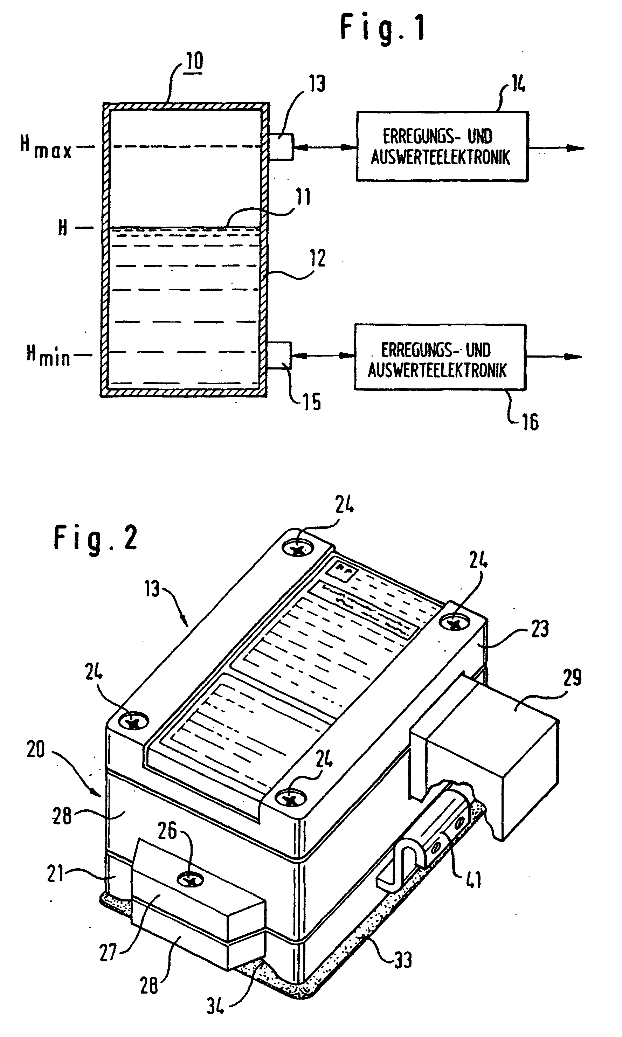

Fig. 1 zeigt einen Behälter 10, der bis zu einer Höhe H mit einer Flüssigkeit 11 gefüllt ist. Die Höhe H, in der sich die Oberfläche der Flüssigkeit 11 über dem Boden des Behälters 10 befindet, ist der momentane Füllstand im Behälter. Der Füllstand soll eine maximale Höhe Hₘₐₓ nicht überschreiten und eine minimale Höhe Hₘᵢₙ nicht unterschreiten. Jeder dieser Grenzwerte des Füllstands wird auch "Grenzstand" genannt.

Zur Überwachung des oberen Grenzstands Hₘₐₓ ist an der Außenseite der Behälterwand 12 ein Füllstandssensor 13 angebracht, der mit einer Erregungs- und Auswerteelektronik 14 verbunden ist. Zur Überwachung des unteren Grenzstands Hₘᵢₙ ist an der Außenseite der Behälterwand 12 ein Füllstandssensor 15 angebracht, der mit einer Erregungs- und Auswerteelektronik 16 verbunden ist. Jeder der beiden Sensoren 13 und 15 ist so ausgebildet, daß mit seiner Hilfe durch die Behälterwand 12 hindurch festgestellt werden kann, ob sich die Flüssigkeit 11 im Behälter 10 auf der Höhe des Sensors 13 bzw. 15 befindet oder nicht. Zu diesem Zweck ist jeder der beiden Sensoren 13 und 15 als Ultraschallsensor ausgebildet, der in der Lage ist, bei Erregung durch einen elektrischen Wechselspannungsimpuls, der von der zugehörigen Erregungs- und Auswerteschaltung 14 bzw. 16 geliefert wird, einen Ultraschallimpuls zur Behälterwand 12 hin auszusenden und empfangene Ultraschallsignale in elektrische Wechselspannungssignale umzusetzen, die zur Elektronik 14 bzw. 16 übertragen werden. Die Elektronik 14 bzw. 16 wertet die Empfangssignale aus und gibt am Ausgang ein Signal ab, das anzeigt, ob der Füllstand im Behälter 10 über oder unter dem zu überwachenden Grenzstand liegt. Zu dieser Feststellung ist es daher nicht erforderlich, die Behälterwand 12 zu durchbrechen oder den Sensor in das Innere des Behälters 10 einzubringen. Aus diesem Grund stehen die Sensoren 13 und 15 auch nicht in direktem Kontakt mit der Flüssigkeit 11.

Die beiden Sensoren 13 und 15 sowie die jeweils zugehörige Elektronik 14 bzw. 16 sind völlig gleich ausgebildet. Nachfolgend wird daher nur der Sensor 13 und die Elektronik 14 im einzelnen beschrieben. Diese Beschreibung gilt in gleicher Weise für den Sensor 15 und die Elektronik 16.

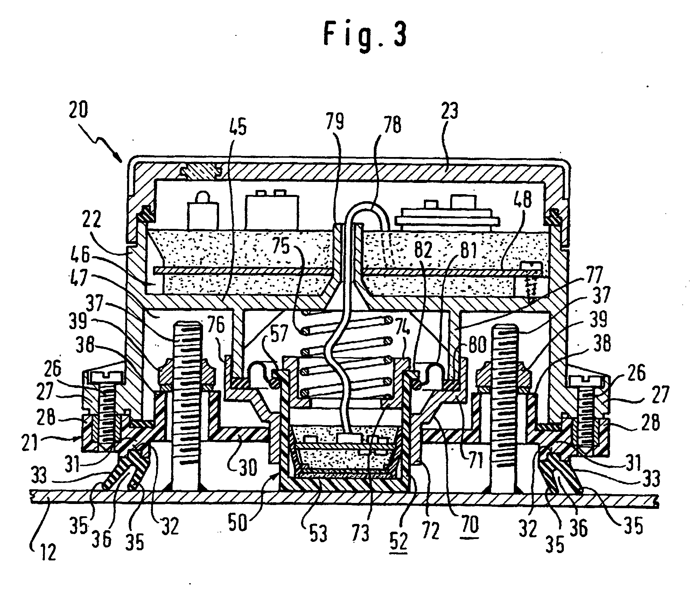

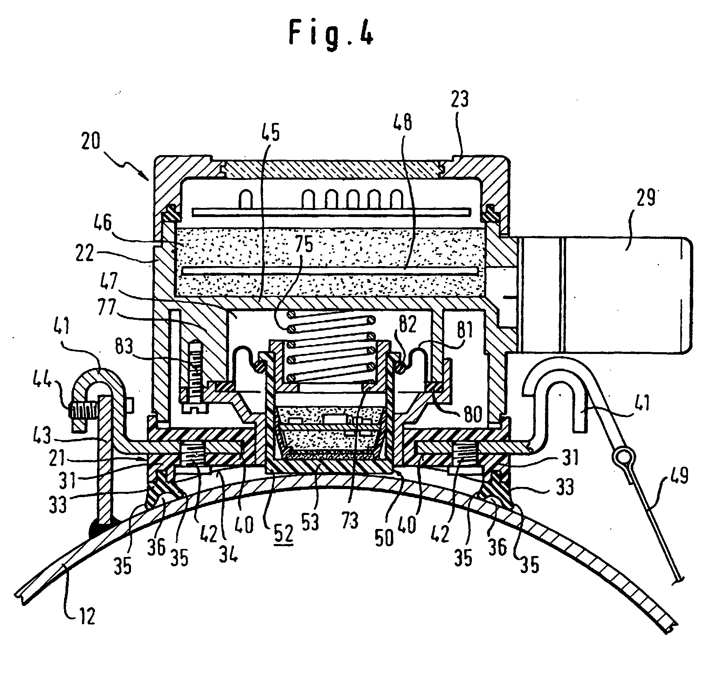

Fig. 2 zeigt eine perspektivische Ansicht des Sensors 13, und die Figuren 3 und 4 zeigen Schnittansichten des an der Behälterwand 12 befestigten Sensors 13. Fig. 3 zeigt einen Längsschnitt des Sensors 13 für den Fall, daß die Behälterwand eben ist, und Fig. 4 zeigt einen Querschnitt durch den Sensor für den Fall, daß die Behälterwand zylindrisch ist. Die Erregungs- und Auswerteelektronik 14, die in Fig. 1 zur Verdeutlichung vom Sensor 13 getrennt dargestellt ist, ist bei der in den Figuren 2 bis 4 dargestellten Ausführungsform mit dem Sensor 13 zusammengebaut.

Der in Fig. 2 gezeigte Sensor besteht aus einem Sensorblock 20, der alle Bestandteile des Ultraschallsensors und der Erregungs- und Auswerteelektronik enthält, und aus einem Adapter 21, der dazu dient, den Sensorblock 20 an Behältern unterschiedlicher Form und Größe sowie aus unterschiedlichen Materialien zu befestigen. Der Sensorblock 20 hat ein Sensorgehäuse 22, das durch einen Deckel 23 verschlossen ist, der mittels Schrauben 24 auf dem Sensorgehäuse 22 befestigt ist. Der Sensorblock 20 ist an dem Adapter 21 mittels Schrauben 26 befestigt, die durch Bohrungen in Vorsprüngen 27 an den Schmalseiten des Sensorgehäuses 22 hindurchgeführt und in Gewindebohrungen in entsprechenden Vorsprüngen 28 am Adapter 21 eingeschraubt sind. Nach Lösen der beiden Schrauben 26 kann der komplette Sensorblock von dem an der Behälterwand 12 befestigten Adapter 21 abgenommen werden. Umgekehrt wird zum Montieren eines Sensors der Adapter 21 ohne den Sensorblock 20 an der gewünschten Stelle einer Behälterwand in einer geeigneten Weise befestigt, und anschließend wird der Sensorblock 20 mit dem betriebsfertig montierten Ultraschallsensor auf den Adapter 21 aufgesetzt und mittels der Schrauben 26 befestigt. Ein seitlich vom Sensorgehäuse 22 abstehender Anschlußblock 29 ermöglicht die Verbindung der im Sensorgehäuse 22 untergebrachten Elektronik mit äußeren Anschlußleitern.

Der Adapter 21 ist ein Kunststoff-Formteil, das im wesentlichen aus einer Platte 30 besteht, deren Umriß dem Umriß des Sensorgehäuses 22 entspricht, bei dem dargestellten Beispiel also rechteckig ist. Rings um den Umfang der Platte 30 ist ein Rahmen 31 angeformt, der an der der Behälterwand zugewandten Seite mit einer Nut 32 versehen ist, in die eine Dichtung 33 eingesetzt ist. An den Längsseiten des Adapters 21, die bei einem zylindrischen Behälter 10 entlang den Mantellinien an der Behälterwand 12 anliegen, hat der Rahmen 31 eine gleichbleibende Höhe. An den Querseiten, die bei einem zylindrischen Behälter 10 entlang dem Umfang an der Behälterwand 12 anliegen, weist der Rahmen 31 eine kreisbogenförmige Ausnehmung 34 auf, wie in Fig. 2 an der vorderen Querseite zu erkennen ist. Der Krümmungsradius der Ausnehmung 34 entspricht dem Radius der Behälterwand 12 des Behälters 10 mit dem kleinsten Durchmesser, an dem der Adapter 21 anzubringen ist. Wenn der Ultraschallsensor 13 für Behälter bestimmt ist, deren Nennweite (Durchmesser) mindestens 200 mm beträgt, beträgt der Krümmungsradius der Ausnehmung 34 also 100 mm.

Die Dichtung 33 ist so ausgebildet, daß ihre zur Anlage an der Behälterwand bestimmte Dichtfläche in einer Ebene liegt, wenn der Adapter 21 noch nicht an der Behälterwand 12 angebracht ist und somit die Dichtung 33 noch nicht verformt ist. Damit diese Bedingung erfüllt ist, hat die Dichtung 33 entlang den Längsseiten des Rahmens 31 eine gleichbleibende Höhe, während ihre Höhe im Bereich jeder Querseite entsprechend der Form der Ausnehmung 34 zur Mitte hin kreisbogenförmig zunimmt. Wie aus den Figuren 3 und 4 zu ersehen ist, ist die Dichtung 33 vorzugsweise mit zwei Dichtlippen 35 ausgebildet, zwischen denen eine Einkerbung 36 besteht. Die Dichtlippen 35 sind entlang den Längsseiten des Rahmens 31 (Fig. 4) verhältnismäßig niedrig, und die Tiefe der Einkerbung 36 ist dort entsprechend gering. Entlang den Querseiten des Rahmens 31 nimmt dagegen die Höhe der Dichtlippen 35 und die Tiefe der Einkerbung 36 in gleichem Maße zu wie die Höhe der Dichtung 33. Da die Schnittebene der Schnittansicht von Fig. 3 durch die Stellen geht, an denen die Ausnehmungen 34 ihre größte Tiefe haben, haben in dieser Schnittansicht die Dichtlippen 35 ihre größte Länge und die Einkerbungen 36 ihre größte Tiefe.

Wenn der Adapter 21 an einer ebenen Behälterwand 12 befestigt wird (Fig. 3), werden die Dichtlippen 35 im Bereich der Ausnehmungen 34 im gleichen Ausmaß zusammengedrückt wie im Bereich der geraden Längsseiten des Rahmens 31, also verhältnismäßig geringfügig. Wenn dagegen der Adapter 21 an einer zylindrischen Behälterwand 12 befestigt wird (Fig. 4), werden die Dichtlippen im Bereich der Ausnehmungen 34 stärker verformt als im Bereich der geraden Längsseiten des Rahmens 31, und zwar umso mehr, je kleiner der Krümmungsradius der Behälterwand 12 ist. Diese stärkere Verformung wird durch die größere Höhe der Dichtlippen 35 und die größere Tiefe der Einkerbung 36 in diesem Bereich ermöglicht. In allen Fällen liegen aber die Dichtlippen 35 entlang dem gesamten Umfang des Adapters 21 dichtend an der Behälterwand 12 an.

Die Schnittansicht von Fig. 3 zeigt eine erste Möglichkeit der Befestigung des Adapters 21 an der Behälterwand 12: An der Behälterwand 12 sind Gewindebolzen 37 angeschweißt, die durch die Öffnungen von Buchsen 38 ragen, die einstückig an die Platte 30 des Adapters 21 angeformt sind. Auf der aus den Buchsen 38 hervorstehenden Enden der Gewindebolzen 37 sind Muttern 39 aufgeschraubt, die die Platte 30 unter Zusammendrückung der Dichtung 33 gegen die Behälterwand 12 verspannen. Gegebenenfalls können an der Platte 30 nach unten zur Behälterwand 12 ragende Abstandshalter angeformt sein, die einen definierten Abstand der Platte 30 von der Behälterwand 12 und dadurch eine definierte Lage des Adapters 21 bezüglich der Behälterwand 12 bestimmen.

In der linken Hälfte von Fig. 4 ist eine andere Art der Befestigung des Adapters 21 an der Behälterwand 12 dargestellt. Hierzu wird in einen seitlichen Schlitz 40, der in der Mitte jeder Längsseite des Adapters 21 angebracht ist, ein Schenkel eines aus starkem Blech geformten Winkelstücks 41 eingesetzt und darin mittels einer Schraube 42 befestigt. Der andere Schenkel des Winkelstücks 40, der rechtwinklig nach oben abgebogen ist, ist am Ende hakenförmig umgebogen. Dieses hakenförmig umgebogene Ende umfaßt eine Schiene 43, die an der Behälterwand 12 angeschweißt ist, und es wird mittels wenigstens einer Schraube 44 an der Schiene 43 festgeklemmt. Diese Art der Befestigung ermöglicht es auf einfache Weise, die Stelle, an der der Sensor 13 am Behälter 10 anzubringen ist, zu bestimmen und gegebenenfalls nachträglich durch Verschieben des Adapters 21 entlang der Schiene 43 zu ändern.

Schließlich ist in der rechten Hälfte von Fig. 4 gezeigt, daß es auch möglich ist, den Adapter 21 mittels eines um den Behälter gelegten Spannbandes 49 zu befestigen. Hierzu wird in jeden der Schlitze 40 auf den beiden Seiten des Adapters 21 ein Winkelstück 41 eingesetzt und an den umgebogenen oberen Enden der nach oben abgebogenen Schenkel der beiden Winkelstücke 41 werden hakenförmige Bügel eingehakt, die an den Enden des um den Behälter gelegten Spannbandes 49 angebracht sind, wie dies in der rechten Hälfte von Fig. 4 für eines der beiden Winkelstücke dargestellt ist. Eine solche Spannbandbefestigung ergibt eine noch größere Freizügigkeit in der Wahl des Ortes der Anbringung des Sensors 13 am Behälter 10 und hat zusätzlich den Vorteil, daß kein Eingriff am Behälter selbst vorgenommen werden muß. Das Einhaken des Spannbandes 49 an den oberen Enden der nach oben abgebogenen Schenkel der Winkelstücke 41 hat zur Folge, daß die Angriffspunkte der vom Spannband 49 ausgeübten Kraft am Adapter 21 verhältnismäßig hoch liegen. Dies ist von Vorteil, weil insbesondere bei Behältern mit großem Krümmungsradius die an den Behälter anpressende Kraftkomponente mit der Höhe des Angriffspunktes deutlich zunimmt.

Die Gewindebolzen 37 oder die Schienen 43 können an der Behälterwand 12 anstatt durch Schweißen auch durch Kleben befestigt werden. Diese Art der Befestigung des Adapters 21 eignet sich dann auch für Behälter aus Kunststoff.

Das Sensorgehäuse 22 ist durch eine Querwand 45 in zwei Räume 46 und 47 unterteilt. In dem der Behälterwand 12 abgewandten äußeren Raum 46 ist die Erregungs- und Auswerteelektronik 14 untergebracht, die in üblicher Weise aus elektronischen Bauteilen besteht, die auf einer Schaltungsplatine 48 montiert sind. In dem der Behälterwand 12 und dem Adapter 21 zugewandten inneren Raum 47 sind die Bestandteile des Ultraschallsensors 13 montiert. Hierzu gehört insbesondere ein elektroakustischer Wandler 50, der dazu dient, einen von der Erregungs- und Auswerteschaltung gelieferten Wechselspannungsimpuls in einen Ultraschallimpuls umzuwandein, der auf die Behälterwand 12 übertragen wird, und Ultraschallschwingungen, die er von der Behälterwand 12 empfängt, in eine elektrische Wechselspannung umzuwandeln, die zu der Erregungs- und Auswerteschaltung übertragen wird.

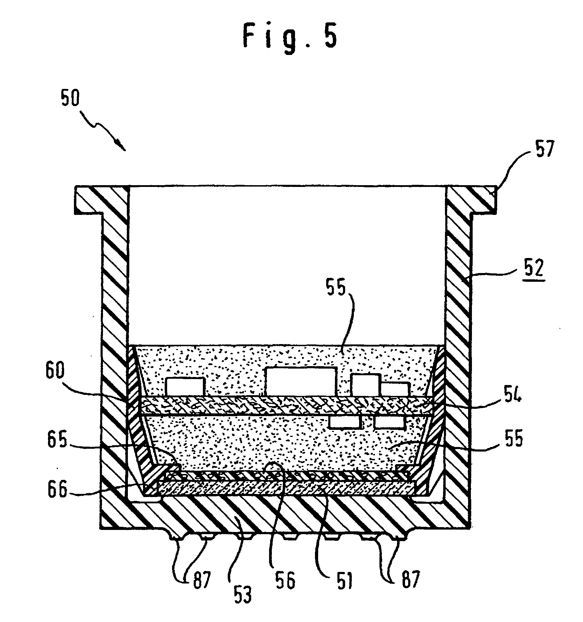

Der elektroakustische Wandler 50 ist in Fig. 5 in näheren Einzelheiten dargestellt. Er enthält als aktives Bestandteil ein piezoelektrisches Element 51, das in bekannter Weise eine Scheibe aus einem Piezokristall ist, auf deren beide Seiten Metallisierungen aufgebracht sind, die als Elektroden dienen. Wenn an die Elektroden eine Wechselspannung angelegt wird, wird der Piezokristall zu mechanischen Schwingungen mit der Frequenz der Wechselspannung angeregt, und wenn auf den Piezokristall mechanische Schwingungen übertragen werden, erzeugt er zwischen den Elektroden eine Wechselspannung mit der Frequenz der mechanischen Schwingungen. In Fig. 5 sind die Elektroden nicht dargestellt, da sie wegen der geringen Dicke der Metallisierung im Vergleich zu der Dicke des Piezokristalls nicht sichtbar sind.

Das piezoelektrische Element 51 ist im Innern eines topfförmigen Wandlergehäuses 52 angeordnet und liegt auf dem Boden 53 des Wandlergehäuses 52 auf, der zugleich die Membran des Ultraschallwandlers 50 bildet. Das Wandlergehäuse 52 besteht aus Kunststoff.

Auf der der Membran 53 abgewandten Seite des piezoelektrischen Elements 51 ist eine Schaltungsplatine 54 angeordnet, die die Bauteile einer Schaltung trägt, die zur Ankopplung des piezoelektrischen Elements 51 an die Erregungs- und Auswerteelektronik 14 dient. Die Schaltungsplatine 54 befindet sich im Abstand von dem piezoelektrischen Element 51, und der Zwischenraum zwischen der Schaltungsplatine 54 und dem piezoelektrischen Element 51 ist mit einer Vergußmasse 55 ausgefüllt, die in flüssigem Zustand eingefüllt wird und sich dann verfestigt. Die der Membran 53 abgewandte Seite des piezoelektrischen Elements 51 ist mit einer Scheibe 56 aus einem geschlossenporigen Schaumstoff bedeckt, die verhindert, daß die Vergußmasse 55 in direkten Kontakt mit dem piezoelektrischen Element 51 kommt. Auch der Raum oberhalb der Schaltungsplatine54 ist bis zu einer solchen Höhe mit der Vergußmasse 55 ausgefüllt, daß alle auf der Schaltungsplatine 54 montierten Schaltungsbestandteile in die Vergußmasse 55 eingebettet sind. Die Vergußmasse 55 ist aus Gründen des Explosionsschutzes vorgeschrieben. Sie bewirkt außerdem eine Dämpfung der Ultraschallwellen, die nach der der Membran 53 entgegengesetzten Seite abgestrahlt werden.

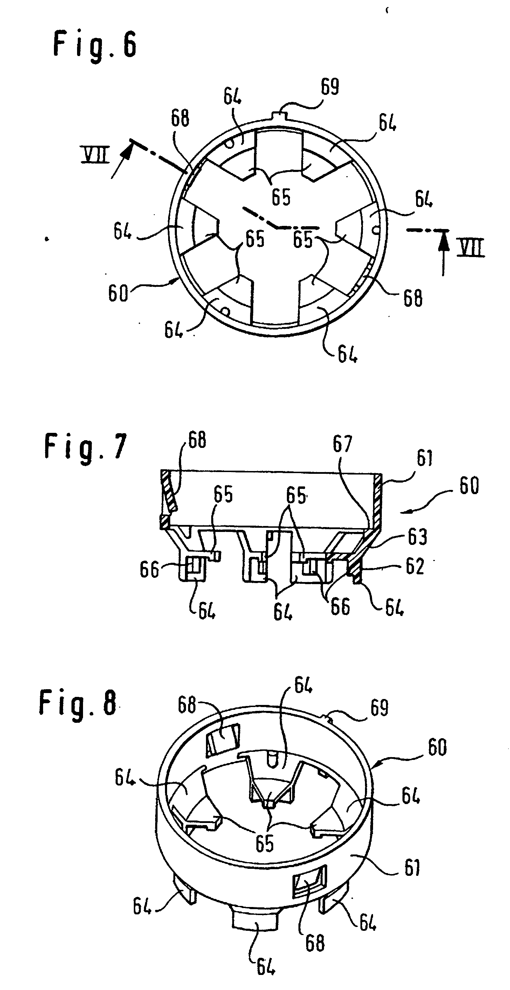

Um den Einbau des piezoelektrischen Elements 51 und der Schaltungsplatine 54 sowie das Vergießen dieser Teile zu erleichtern, ist eine Montagehülse 60 vorgesehen, die in den Figuren 6, 7 und 8 in näheren Einzelheiten dargestellt ist. Die Montagehülse 60 ist ein Formkörper aus Kunststoff, der in Fig. 6 in Draufsicht, in Fig. 7 im Längsschnitt entlang der gebrochenen Linie A-A von Fig. 6 und in Fig. 8 in perspektivischer Ansicht gezeigt ist. Die Montagehülse 60 hat einen breiteren zylindrischen Abschnitt 61, einen engeren zylindrischen Abschnitt 62 von kleinerem Durchmesser und einen konischen Abschnitt 63 zwischen den beiden zylindrischen Abschnitten 61 und 62. Der Außendurchmesser des breiteren zylindrischen Abschnitts 61 entspricht dem Innendurchmesser des topfförmigen Wandlergehäuses 52, und der Innendurchmesser des engeren zylindrischen Abschnitts 62 entspricht dem Durchmesser des piezoelektrischen Elements 51. Der engere zylindrische Abschnitt 62 und der konische Übergangsabschnitt 63 sind durch Ausschnitte in sechs Segmente 64 unterteilt. An jedem Segment 64 ist an dem Übergang zwischen dem zylindrischen Abschnitt 61 und dem konischen Abschnitt 63 eine radial nach innen ragende Tatze 65 angeformt. Unterhalb jeder Tatze 65 ist eine Anschlagnase 66 angeformt, die sich nur über einen Teil der Höhe des zylindrischen Abschnitts 62 nach unten erstreckt und nur geringfügig radial nach innen vorspringt. Am Übergang zwischen dem konischen Abschnitt 63 und dem breiteren zylindrischen Abschnitt 61 ist eine Schulter 67 gebildet. In der Wand des breiteren zylindrischen Abschnitts 61 ist an zwei einander diametral gegenüberliegenden Stellen durch Ausschnitte jeweils eine elastische Raste 68 gebildet, deren freies Ende geringfügig nach innen vorspringt und in einem Abstand von der Schulter 67 liegt, der der Dicke der Schaltungsplatine 54 entspricht. Eine am Umfang des breiteren zylindrischen Abschnitts 61 angeformte Rippe 69 greift in eine entsprechende Nut im Wandlergehäuse 52 ein, wodurch die Montagehülse 60 im Wandlergehäuse 52 gegen Verdrehung gesichert wird.

Die beschriebene Ausbildung der Montagehülse 60 erlaubt eine einfache, schnelle und präzise Montage der Bestandteile des Ultraschallwandlers 50 außerhalb des Wandlergehäuses 52. Das piezoelektrische Element 51 mit der darauf aufgelegten Scheibe 56 aus geschlossenporigem Schaumstoff wird von unten her in den engeren zylindrischen Abschnitt 62 eingeführt, bis das piezoelektrische Element 51 an den Enden der Anschlagnasen 66 anstößt. Dadurch ist die radiale und axiale Lage des piezoelektrischen Elements 51 in der Montagehülse 60 genau festgelegt. Der Durchmesser der Schaumstoffscheibe 56 ist etwas kleiner als der Durchmesser des piezoelektrischen Elements 51 und entspricht dem Abstand zwischen zwei einander diametral gegenüberliegenden Anschlagnasen 66, und die Dicke der Schaumstoffscheibe 56 entspricht der Höhe der Anschlagnasen 66. Somit liegen die Tatzen 65 auf der Oberseite der Schaumstoffscheibe 56 auf, wenn das piezoelektrische Element 51 bis zum Anschlag in die Montagehülse 60 eingeführt ist, und die Anschlagnasen 66 liegen am Umfang der Schaumstoffscheibe 56 an. Dadurch ist die radiale und axiale Lage der Schaumstoffscheibe 56 in der Montagehülse 60 genau festgelegt, und die Schaumstoffscheibe 56 wird durch die Tatzen 65 in enger Anlage an der Oberseite des piezoelektrischen Elements 51 gehalten.

Die Schaltungsplatine 54 ist kreisrund mit einem Durchmesser, der dem Innendurchmesser des breiteren zylindrischen Abschnitts 61 der Montagehülse 60 entspricht. Sie wird von oben her in den breiteren zylindrischen Abschnitt 61 eingeführt, bis sie auf der Schulter 67 aufliegt. Während des Einschiebens werden die Rasten 68 vom Umfangsrand der Schaltungsplatine 54 nach außen gedrückt, bis der Umfangsrand der Schaltungsplatine 54 an den Enden der Rasten 68 vorbeigegangen ist. Dann springen die Rasten 68 aufgrund ihrer Elastizität wieder nach innen vor, so daß sie über die Oberseite der Schaltungsplatine 54 greifen und diese auf der Schulter 67 festhalten. Dadurch ist auch die Schaltungsplatine 54 in axialer und radialer Richtung in der Montagehülse 60 festgelegt. Nun ist die Montagehülse 60 zum Einbau in das topfförmige Wandlergehäuse 52 bereit. Hierzu wird zunächst ein Tropfen eines wärmehärtbaren Klebstoffs auf den Boden 53 des Wndlergehäuses 52 aufgebracht, und anschließend wird die Montagehülse 60 in das Wandlergehäuse 52 eingeschoben, bis das piezoelektrische Element 51 den Boden 53 berührt. Dabei verteilt sich der Klebstoff in einer dünnen Schicht zwischen den einander zugewandten Flächen des piezoelektrischen Elements 51 und des Bodens 53. Dann wird der Klebstoff durch Erwärmung gehärtet, wobei die Montagehülse 60 mit einem Gewicht beschwert wird, damit eine definierte Klebstoffschicht erhalten wird. Die Klebstoffschicht gewährleistet den Kontakt zwischen dem piezoelektrischen Element 51 und der vom Boden 53 gebildeten Membran des Ultraschallwandlers 50, und sie verhindert die Bildung einer Luftschicht zwischen diesen Teilen.

Dann wird von oben Vergußmasse 55 in die Montagehülse 60 eingefüllt. Diese Vergußmasse fließt durch hierfür vorgesehene Öffnungen in der Schaltungsplatine 54 auch in den Zwischenraum zwischen der Schaltungsplatine 54 und der Schaumstoffscheibe 56. Die Schaumstoffscheibe 56 verhindert, daß die Vergußmasse 55 in Kontakt mit der Oberseite des piezoelektrischen Elements 51 kommt. Die Tatzen 65, die den Rand der Schaumstoffscheibe 56 auf die Oberseite des piezoelektrischen Elements 51 drücken, verhindern, daß Vergußmasse 55 zwischen die Schaumstoffscheibe 56 und das piezoelektrische Element 51 kriecht.

Zur Montage des topfförmigen Wandlergehäuses 52 im Sensorgehäuse 22 dient ein Halteteil 70 mit einem Flansch 71, an dem eine Führungsbuchse 72 angeformt ist. Das Wandlergehäuse 52 wird in die Führungsbuchse 72 eingeschoben, deren Innendurchmesser dem Außendurchmesser des Wandlergehäuses 52 entspricht, so daß das Wandlergehäuse 52 gleitbar in der Führungsbuchse 72 gelagert ist. Der Bund 57 am Wandlergehäuse 52 verhindert, daß das Wandlergehäuse 52 aus der Führungsbuchse 72 austritt. In das offene Ende des Wandlergehäuses 52 wird ein Federbecher 73 eingesteckt, der seinerseits einen Bund 74 aufweist, der sich am Ende des Wandlergehäuses 52 abstützt. Der Federbecher 73 nimmt das eine Ende einer Schraubendruckfeder 75 auf. Rings um den Rand des Flansches 71 verläuft ein Bund 76, dessen Innendurchmesser dem Außendurchmesser eines an der Querwand 45 angeformten Trägerrohres 77 entspricht.

Vor dem Anbringen des Halteteils 70 an dem Trägerrohr 77 wird eine Verbindungsleitung 78, die an der Schaltungsplatine 54 angelötet ist und zur Verbindung des Ultraschallwandlers 50 mit der Erregungs- und Auswerteelektronik 14 bestimmt ist, durch einen von der Querwand 45 nach der entgegengesetzten Seite abstehenden Rohrstutzen 79 durchgeführt. Auf den Flansch 71 wird ein Dichtungsring 80 aufgelegt, an dem der Außenrand einer ringförmigen Manschette 81 befestigt ist, deren Innenrand mit einem um das Wandlergehäuse 52 gelegten elastischen Ring 82 verbunden ist. Dann wird der Bund 76 über das Trägerrohr 77 geschoben, und der Flansch 71 wird mittels Schrauben 83, die in verdickte Wandabschnitte des Trägerrohres 77 eingeschraubt werden und von denen eine in Fig. 4 sichtbar ist, am Trägerrohr 77 befestigt. Die Feder 75 ist so bemessen, daß sie zwischen dem Federbecher 73 und der Querwand 45 zur Erzielung einer gewünschten Vorspannung zusammengedrückt ist, wenn das Halteteil 70 am Trägerrohr 77 befestigt ist.

Anschließend kann die Verbindungsleitung 78 an den auf der Schaltungsplatine 48 vorgesehenen Anschlußstellen angelötet werden, und der äußere Raum 46 kann nahezu bis zur Höhe des Rohrstutzens 79 mit einer Vergußmasse gefüllt werden. Der Rohrstutzen 79 verhindert, daß die Vergußmasse in den inneren Raum 47 fließt.

Damit ist der Sensorblock 20 betriebsfertig montiert, und er kann auf dem Adapter 21 befestigt werden. Hierzu wird die Führungsbuchse 72 durch eine Öffnung in der Platte 30 des Adapters 21 gesteckt, so daß der Boden des Wandlergehäuses 52, also die Membran 53 des Ultraschallwandlers 50, an die Außenseite der Behälterwand 12 angelegt wird. Wenn der Sensorblock 20 weiter zum Adapter 21 hin bewegt wird, wird das Wandlergehäuse 52 von der Behälterwand 12 festgehalten, so daß es in die Führungsbuchse 72 hineingeschoben wird, wodurch die Feder 75 weiter zusammengedrückt wird. Wenn schließlich der Sensorblock 20 mittels der Schraube 26 auf dem Adapter 21 befestigt ist, wird die Membran 53 mit einer durch die Feder 75 bestimmten Andruckkraft an die Behälterwand 12 angedrückt.

Ein Vergleich der Figuren 3 und 4 läßt erkennen, daß der Ultraschallwandler 50 bei Anbringung des Sensors 13 an einer ebenen Behälterwand 12 (Fig. 3) weiter aus der Führungsbuchse 72 herausragt als im Falle einer gekrümmten Behälterwand 12 (Fig. 4), wobei aber in jedem Fall die Anlage der Membran 53 an der Behälterwand 12 mit einer durch die Feder 75 bestimmten Andruckkraft gewährleistet ist.

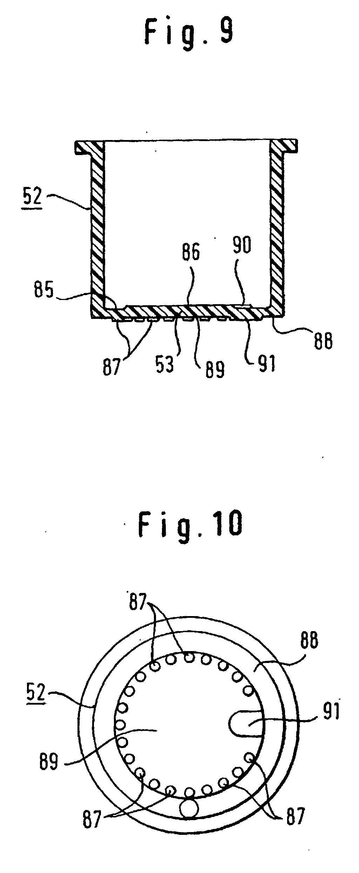

Für das einwandfreie Funktionieren des Ultraschallsensors und die Erzielung eines guten Wirkungsgrads ist es wesentlich, daß eine gute akustische Kopplung einerseits zwischen dem piezoelektrischen Element 51 und der Membran 53 und andererseits zwischen der Membran 53 und der Behälterwand 12 besteht. Insbesondere dürfen zwischen diesen Teilen keine Luftschichten vorhanden sein, da diese zu hohen Sprüngen der akustischen Impedanz auf dem Weg vom piezoelektrischen Element 51 zur Behälterwand 12 und zurück führen würden. An Hand der Figuren 9 und 10 wird die bevorzugte Ausbildung der Membran 53 erläutert, mit der diese gute akustische Kopplung erzielt werden kann.

Die Schnittansicht des Wandlergehäuses 52 in Fig. 9 läßt erkennen, daß auf der Innenseite der Membran 53 eine rings um den Umfang verlaufende Vertiefung 85 geformt ist, die den aktiven Membranbereich 86 umgibt, auf dem das piezoelektrische Element 51 aufliegt. Wie bereits zuvor erläutert wurde, wird zur Vermeidung jeglicher Luftschicht zwischen dem piezoelektrischen Element 51 und dem aktiven Membranbereich 86 vor dem Einsetzen der Montagehülse 60 in das topfförmige Wandlergehäuse 52 auf die freiliegende Fläche des piezoelektrischen Elements 51 ein Klebstoff aufgebracht, der sich dann, wenn das piezoelektrische Element 51 beim Einsetzen der Montagehülse 60 auf den aktiven Membranbereich 86 aufgedrückt wird, zwischen den einander zugewandten Flächen dieser beiden Teile verteilt. Die ringförmige Vertiefung 85 dient zur Aufnahme von überschüssigem Klebstoff, der aus dem Zwischenraum zwischen dem piezoelektrischen Element 51 und dem aktiven Membranbereich 86 verdrängt wird. Vorzugsweise wird ein wärmehärtbarer Klebstoff verwendet, weil dieser seine Eigenschaften auch bei höheren Betriebstemperaturen nicht verliert.

Auf der Außenseite der Membran 53 ist eine Reihe von Vorsprüngen 87 angeformt, die in einem Kreisring angeordnet sind, der sich ungefähr mit dem Umfang des aktiven Membranbereichs 86 deckt (Fig. 10). Die Vorsprünge 87 haben bei dem dargestellten Beispiel die Form von runden Noppen. Der außerhalb des Rings der Vorsprünge 87 liegende ringförmige Bereich 88 der Membran 53 ist gegenüber der innerhalb des Rings liegenden Membranfläche 89 etwas vertieft. In Fig. 9 ist an der Innenseite der Membran 53 eine Vertiefung 90 zu erkennen, die zur Aufnahme der Lötstelle dient, durch die ein Anschlußleiter mit der auf der Membran aufliegenden Elektrode des piezoelektrischen Elements 51 verbunden ist. Dieser Vertiefung liegt an der Außenseite der Membran 53 ein entsprechend erweiterter Vorsprung 91 gegenüber.

Bei der Montage des Sensors 13 an der Behälterwand 12, also in dem zuvor beschriebenen Beispiel bei der Montage des Sensorblocks 20 am Adapter 21, wird zwischen die Membran 53 und die Behälterwand 12 eine Kopplungsschicht aus einem Material eingebracht, das die Bildung einer Luftschicht zwischen der Membran 53 und der Behälterwand 12 verhindert und eine gute akustische Kopplung zwischen der Membran und der Behälterwand ergibt. Die Vorsprünge 87, die in direkte Berührung mit der Behälterwand 12 kommen, bestimmen die Dicke der Kopplungsschicht.

Als Material für die Kopplungsschicht eignet sich beispielsweise das im Handel unter der Bezeichnung Wacker SilGel 612 bekannte Silicon-Gel. Hierbei handelt es sich um einen 2-Komponenten-Siliconkautschuk, der sich nach dem Mischen der beiden Komponenten durch Additionsvernetzung zu einem sehr weichen, gelartigen Vulkanisat verfestigt. Dieses Material ist nach dem Mischen der beiden Komponenten zunächst sehr dünnflüssig, was ungünstig ist, da die Gefahr besteht, daß es vorzeitig abfließt, wenn es auf die Membranfläche 89 aufgebracht wird, bevor die Membran 53 auf die Behälterwand 12 aufgesetzt wird. Das Silicon-Gel wird daher vorzugsweise durch Beimischung von Glasfasern verstärkt, beispielsweise in einem Anteil von 50 Vol.-%. Die Glasfasern können einen Durchmesser von 30 µm und eine Länge von 400 µm haben. Durch die Glasfasern wird die Viskosität des Silicon-Gels erhöht, wodurch das vorzeitige Abfließen vermieden wird. Zusätzlich bewirken die Glasfasern auch eine Erhöhung der akustischen Impedanz der Kopplungsschicht, was günstig ist, da sich diese dadurch der akustischen Impedanz der Kunststoffmembran 53 annähert.

Beim Aufsetzen der Membran 53 auf eine ebene Behälterwand 12 kann überschüssiges Material der Kopplungsschicht durch die Zwischenräume zwischen den Vorsprüngen 87 verdrängt werden. Aus diesem Grund ist es nicht zweckmäßig, einen geschlossenen Ring als Abstandshalter zur Bestimmung der Dicke der Kopplungsschicht vorzusehen.

Wenn die Membran 53 auf eine zylindrische Behälterwand 12 aufgesetzt wird, entsteht ein Kontakt zwischen den Vorsprüngen 87 und der Behälterwand 12 im wesentlichen nur entlang einer Mantellinie des Behälters. Für die Funktion des Ultraschallsensors kommt es nur auf die Verhältnisse entlang dieser Berührungslinie an; auch in diesem Fall bestimmen die Vorsprünge 87 die Dicke der Kopplungsschicht entlang dieser Berührungslinie.

Für die durch die Kopplungsschicht erzielte gute Kopplung zwischen der Membran 53 und der Behälterwand 12 ist es wesentlich, daß die Membran aus Kunststoff besteht, weil die akustischen Impedanzen der Kunststoffmembran und der Kopplungsschicht in der gleichen Größenordnung liegen, so daß keine großen Impedanzsprünge entstehen. Dies ermöglicht die Verwendung einer verhältnismäßig dicken Kopplungsschicht. Je dicker die Kopplungsschicht ist, desto besser ist die thermische und mechanische Stabilität des Sensors. Nach oben ist die Dicke der Kopplungsschicht dadurch begrenzt, daß ihre Dickenresonanz oberhalb der angewendeten Ultraschallfrequenz liegen soll. Bei Verwendung des oben erwähnten glasfaserverstärkten Silicon-Gels kann die Dicke der Kopplungsschicht und damit die Höhe der Vorsprünge etwa 0,2 mm betragen.

Da die Membran 53 ein Teil des Wandlergehäuses 52 ist, muß das ganze Wandlergehäuse 52 aus einem Kunststoff bestehen, der für die Membran 53 geeignet ist. Eine wesentliche Anforderung an das Material der Membran besteht darin, daß der dynamische Glasübergang, d.h. die Temperatur, bei welcher der Kunststoff aus der kristallinen Phase in die amorphe Phase übergeht, oberhalb der höchsten vorkommenden Betriebstemperatur liegen soll. Als besonders gut geeignet hat sich Polyetheretherketon (PEEK) erwiesen.

## Patentansprüche

1. Anordnung zur Überwachung eines vorbestimmten Füllstands einer Flüssigkeit in einem Behälter mit einem Ultraschallwandler, der an einer auf der Höhe des zu überwachenden Füllstands liegenden Meßstelle an der Außenseite der Behälterwand montiert ist und ein piezoelektrisches Element enthält, das bei Erregung durch einen Wechselspannungsimpuls mit einer vorgegebenen Sendefrequenz einen Ultraschall-Sendeimpuls erzeugt, der über eine Membran auf die Behälterwand übertragen wird, und das Ultraschallschwingungen, die von der Behälterwand auf den Ultraschallwandler übertragen werden, in elektrische Empfangssignale umwandelt, **dadurch gekennzeichnet, daß** die Membran auf der der Behälterwand zugewandten Seite Vorsprünge aufweist, die an der Behälterwand anliegen, und daß zwischen der Membran und der Behälterwand eine Kopplungsschicht angeordnet ist, deren Dicke durch die Höhe der Vorsprünge bestimmt ist.

2. Anordnung nach Anspruch 1, **dadurch gekennzeichnet, daß** die Vorsprünge die Form von Noppen haben.

3. Anordnung nach Anspruch 1 oder 2, **dadurch gekennzeichnet, daß** die Vorsprünge rings um den Umfang des aktiven Membranbereichs angeordnet sind.

4. Anordnung nach Anspruch 3, **dadurch gekennzeichnet, daß** der außerhalb des Rings der Vorsprünge liegende ringförmige Bereich der Membran gegenüber dem aktiven Membranbereich vertieft ist.

5. Anordnung nach einem der Ansprüche 1 bis 4, **dadurch gekennzeichnet, daß** die Kopplungsschicht aus einem Kopplungsmaterial besteht, das in fließfähigem Zustand zwischen die Membran und die Behälterwand eingebracht und anschließend verfestigt wird.

6. Anordnung nach Anspruch 5, **dadurch gekennzeichnet, daß** die akustische Impedanz des Kopplungsmaterials im verfestigten Zustand in der Größenordnung der akustischen Impedanz der Membran liegt.

7. Anordnung nach Anspruch 6, **dadurch gekennzeichnet, daß** das Kopplungsmaterial ein Silicon-Gel ist.

8. Anordnung nach Anspruch 7, **dadurch gekennzeichnet, daß** das Silicon-Gel durch Glasfasern verstärkt ist.

9. Anordnung nach einem der Ansprüche 1 bis 8, **dadurch gekennzeichnet, daß** ein den aktiven Membranbereich umgebender ringförmiger Umfangsbereich auf der der Behälterwand abgewandten Seite der Membran gegenüber dem aktiven Membranbereich vertieft ist, und daß das piezoelektrische Element auf den innerhalb der ringförmigen Vertiefung liegenden aktiven Membranbereich aufgeklebt ist.

10. Anordnung nach einem der Ansprüche 1 bis 9, **dadurch gekennzeichnet, daß** die Membran durch den Boden eines topfförmigen Wandlergehäuses aus Kunststoff gebildet ist.

11. Anordnung nach Anspruch 10, **dadurch gekennzeichnet, daß** das topfförmige Wandlergehäuse aus Polyetheretherketon (PEEK) besteht.

## Claims

1. A device for monitoring a pre-determined filling level of a liquid in a container with an ultrasonic transducer which is mounted on the outside of the container wall at a measurement point situated at the level of the filling level to be monitored and contains a piezoelectric element which when energized by an alternating-current voltage pulse at a preset transmission frequency generates an ultrasonic transmission pulse transmitted by way of a diaphragm to the container wall, and which piezoelectric element converts ultrasonic vibrations - transmitted from the container wall to the ultrasonic transducer - into electrical receiving signals, **characterized in that** the side of the diaphragm facing the container wall has projections which rest against the container wall, and a coupling layer, the thickness of which is determined by the height of the projections, is arranged between the diaphragm and the container wall.

2. A device according to Claim 1, **characterized in that** the projections are in the form of knobs.

3. A device according to Claim 1 or 2, **characterized in that** the projections are arranged all around the periphery of the active region of the diaphragm.

4. A device according to Claim 3, **characterized in that** the annular region of the diaphragm situated outside the ring of the projections is recessed with respect to the active region of the diaphragm.

5. A device according to one of Claims 1 to 4, **characterized in that** the coupling layer consists of a coupling material which is introduced in a free-flowing state between the diaphragm and the container wall and is then solidified.

6. A device according to Claim 5, **characterized in that** the acoustic impedance of the coupling material in the solidified state is in the order of magnitude of the acoustic impedance of the diaphragm.

7. A device according to Claim 6, **characterized in that** the coupling material is a silicone gel.

8. A device according to Claim 7, **characterized in that** the silicone gel is reinforced by glass fibres.

9. A device according to one of Claims 1 to 8, **characterized in that** an annular peripheral region surrounding the active region of the diaphragm is recessed with respect to the active region of the diaphragm on the side of the diaphragm remote from the container wall, and the piezoelectric element is secured by adhesion to the active region of the diaphragm situated inside the annular depression.

10. A device according to one of Claims 1 to 9, **characterized in that** the diaphragm is formed by the base of a cup-shaped transducer housing consisting of plastics material.

11. A device according to Claim 10, **characterized in that** the cup-shaped transducer housing consists of polyetheretherketone (PEEK).

## Revendications

1. Dispositif de surveillance d'un niveau de liquide prédéfini dans un réservoir, comprenant un transducteur d'ultrasons, qui est monté sur la face extérieure de la paroi du réservoir à un emplacement de mesure situé à la hauteur du niveau à surveiller et qui comporte un élément piézoélectrique, qui, sous l'effet d'une excitation par une impulsion de tension alternative, génère une impulsion d'émission d'ultrasons avec une fréquence d'émission prédéfinie, laquelle est transmise sur la paroi du réservoir via une membrane, et par lequel des oscillations d'ultrasons, qui sont transmises de la paroi du réservoir vers le transducteur d'ultrasons, sont transformées en signaux de réception électriques, **caractérisé en ce que** la membrane sur la face orientée vers la paroi du réservoir comporte des saillies, qui sont en appui contre la paroi du réservoir, et **en ce qu'**une couche de liaison, dont l'épaisseur est définie par la hauteur des saillies, est agencée entre la membrane et la paroi du réservoir.

2. Dispositif selon la revendication 1, **caractérisé en ce que** les saillies ont la forme de nopes.

3. Dispositif selon la revendication 1 ou 2, **caractérisé en ce que** les saillies sont disposées en cercle sur le pourtour de la zone active de la membrane.

4. Dispositif selon la revendication 3, **caractérisé en ce que** la zone circulaire de la membrane, située en dehors du cercle de saillies, est en creux par rapport à la zone active de la membrane.

5. Dispositif selon une des revendications 1 à 4, **caractérisé en ce que** la couche de liaison est formée par un matériau de liaison qui est introduit à l'état fluide entre la membrane et la paroi du réservoir et durcit ensuite.

6. Dispositif selon la revendication 5, **caractérisé en ce que** l'impédance acoustique du matériau de liaison à l'état durci se situe dans l'ordre de grandeur de l'impédance acoustique de la membrane.

7. Dispositif selon la revendication 6, **caractérisé en ce que** le matériau de liaison est un gel de silicone.

8. Dispositif selon la revendication 7, **caractérisé en ce que** le gel de silicone est renforcé par des fibres de verre.

9. Dispositif selon une des revendications 1 à 8, **caractérisé en ce qu'**une zone périphérique circulaire, concentrique à la zone active de la membrane, sur la face de la membrane opposée à la paroi du réservoir est réalisée en creux par rapport à la zone active de la membrane, et **en ce que** l'élément piézoélectrique est collé sur la zone active de la membrane située à l'intérieur du creux circulaire.

10. Dispositif selon une des revendications 1 à 9, **caractérisé en ce que** la membrane est formée par le fond d'un boîtier de transducteur en forme de pot et en matière plastique.

11. Dispositif selon la revendication 10, **caractérisé en ce que** le boîtier de transducteur en forme de pot est réalisé en polyétheréthercétone (PEEK).
